# FASCICULE DE BREVET EUROPEEN

(11) **EP 3 409 857 B1**
(45) Date de publication et mention de la délivrance du brevet: **24.06.2020**
(21) Numéro de dépôt: 18174661.1
(22) Date de dépôt: 28.05.2018
(51) Int. Cl.: E04B 1/94, E04C 2/04, E04C 2/26, B32B 7/12, B32B 13/10, B32B 21/14, B32B 37/06, B32B 37/10, B32B 37/12, B32B 37/00

(54) **PANNEAU DÉCORATIF RÉSISTANT AU FEU, SON UTILISATION ET SON PROCÉDÉ DE FABRICATION**
FEUERBESTÄNDIGES DEKORATIVES PANEEL, VERWENDUNG UND HERSTELLUNGSVERFAHREN DESSEN
DECORATIVE FIREPROOF PANEL, USE THEREOF AND METHOD OF MANUFACTURE THEREOF

(30) Priorité: 01.06.2017 FR 1770569
(43) Date de publication de la demande: 05.12.2018
(73) Titulaire: Malvaux S.A.S., 17330 Loulay (FR)
(72) Inventeur: Denavit, Philippe, 77630 Macherin (FR)
(74) Mandataire: Koudine, Andreï

(56) Documents cités:
- EP-A1- 2 060 389
- EP-A1- 2 918 745
- FR-A1- 2 849 460
- FR-A1- 2 943 698

## Description

La présente invention concerne, de manière générale, le domaine des éléments de construction non porteurs ou parties d'ouvrages, avec ou sans vitrage, services et accessoires. Plus particulièrement, la présente invention concerne le domaine des panneaux pour un aménagement intérieur et, notamment, des panneaux décoratifs résistant au feu, comme ceux décrits, par exemple, dans FR2849460A1, EP2060389A1. Ces derniers représentent des revêtements (pour murs, plafonds, cloisons, portes, mobiliers intérieurs etc.) avec capacité de protection contre l'incendie.

En sécurité incendie, la « résistance au feu » et la « réaction au feu » représentent deux notions distinctes l'une de l'autre.

La résistance au feu indique le temps durant lequel, lors d'un feu, un élément de construction (paroi, plancher, plafond, porte, ...) conserve ses propriétés physiques et mécaniques. Autrement dit, la résistance au feu est le temps durant lequel un tel élément de construction joue son rôle de limitation de la propagation du feu.

La réaction au feu traduit un comportement (combustible ou inflammable) d'un matériau en tant qu'aliment du feu. La norme européenne EN 13-501-1 définie la réaction au feu comme un comportement d'un produit, qui dans des conditions spécifiées, alimente par sa propre décomposition un feu auquel il est exposé. La norme européenne EN 13-501-1 définie des « euroclasses » de réaction au feu. Ce système de classement s'appuie sur des essais dont les résultats permettent de ranger les produits dans sept euroclasses selon leur contribution potentielle au feu :
- produits combustibles dont la contribution au feu est très importante (classes E et F),
- produits combustibles dont la contribution au feu est très limitée (classe B), limitée (classe C) ou significative (classe D),
- produits non combustibles (classe A1) ou très peu combustibles (classe A2).

En pratique, les produits classés A2 selon la norme européenne EN 13-501-1 résistent au feu plus longtemps que les produits classés B, C, D, E, F. C'est la raison pour laquelle ces produits classés A2 sont parfois appelés « anti-feu ».

Plus particulièrement, selon un premier de ses aspects, l'invention concerne un panneau décoratif résistant au feu pour un aménagement intérieur, ce panneau décoratif comportant une âme centrale présentant une face recto revêtue d'un premier placage de bois, l'âme centrale et le premier placage de bois étant solidaires l'un avec l'autre.

Un tel panneau décoratif connu est décrit dans la demande de brevet français FR2695159A1. Pour résister au feu plus longtemps, ce panneau décoratif connu présente une structure du type « sandwich » qui comporte une plaque unifuge fixée (par collage) entre l'âme centrale et le premier placage de bois. Cette plaque unifuge est déformable à la chaleur en s'expansant sous forme d'une couche de mousse incombustible à pores fins résistante à la compression et jouant le rôle d'isolant thermique. La présence de cette plaque unifuge intercalaire rend ce panneau décoratif plus épais et plus lourd ce qui est incommodant. En outre, une expansion de ladite plaque unifuge sous forme d'une couche de mousse incombustible à pores fins est un processus chimique complexe dont la dynamique est hétérogène. De ce fait, la réaction au feu du panneau décoratif selon FR2695159A1 reste difficilement prédictible.

Un autre panneau décoratif connu pour un aménagement intérieur est décrit dans la demande de brevet français FR2849460A1. Comme le panneau décoratif selon FR2695159A1 évoqué précédemment, le panneau décoratif selon FR2849460A1 comporte une âme centrale présentant une face recto revêtue d'un premier placage de bois. L'âme centrale et le premier placage de bois sont solidaires l'un avec l'autre.

Selon FR2849460A1, l'âme centrale est constituée d'un matériau plein incombustible présentant une première épaisseur.

Grâce à cet agencement, le panneau décoratif connu présente une durée de tenue au feu de 30 minutes. Ce résultat « anti-feu » est atteint sans aucune plaque unifuge intercalaire entre l'âme centrale et le premier placage de bois ce qui rend le panneau décoratif selon FR2849460A1 plus fin et, de ce fait, plus léger par rapport au panneau décoratif selon FR2695159A1. Cela permet de gaspiller moins de la matière première lors de la fabrication des panneaux décoratifs selon FR2849460A1.

Cependant, il est observé un embrasement trop rapide du premier placage de bois lorsque le panneau décoratif selon FR2849460A1 est exposé au feu. Une énergie thermique ainsi dégagée crée quasi instantanément une vague de chaleur destructive ce qui n'est pas satisfaisant.

Le panneau décoratif selon FR2849460A1 comporte l'ensemble des caractéristiques du préambule de la revendication 1.

La présente invention, qui s'appuie sur cette observation originale, a principalement pour but de proposer un panneau décoratif résistant au feu pour un aménagement intérieur visant au moins à réduire une limitation précédemment évoquée.

A cette fin, le panneau décoratif résistant au feu pour un aménagement intérieur, par ailleurs conforme à la définition générique qu'en donne le préambule ci-dessus se référant à un prototype connu selon FR2849460A1, est essentiellement caractérisé en ce que le premier placage de bois présente une deuxième épaisseur distincte de la première épaisseur, cette deuxième épaisseur étant comprise entre 0,2 mm et 0,4 mm.

La deuxième épaisseur sélectivement comprise entre 0,2 mm et 0,4 mm présente un quadruple avantage. D'une part, lorsque le premier placage de bois est exposé au feu, elle permet de transmettre quasi instantanément la chaleur issue du feu vers l'âme centrale où cette chaleur se dissipe. Cela contribue à retarder un embrasement du premier placage de bois exposé au feu. D'autre part, la deuxième épaisseur étant faible, le premier placage de bois exposé au feu représente si peu de matériau combustible qu'il n'alimente quasiment pas le feu. Cela contribue à obtenir une réaction du panneau décoratif selon l'invention au feu classée A2 conformément à la norme européenne EN 13-501-1. Le troisième avantage est dû au fait que la deuxième épaisseur sélectivement comprise entre 0,2 mm et 0,4 mm rend le panneau décoratif selon l'invention plus léger ce qui facilite son transport et/ou sa mise en place lors des travaux d'aménagement intérieur. Enfin, la deuxième épaisseur étant supérieure à 0,2 mm, elle reste suffisamment épaisse pour cacher (c'est-à-dire, rendre invisible de l'extérieur) toute imperfection propre à un état de la surface de la face recto de l'âme centrale.

La deuxième épaisseur sélectivement comprise entre 0,2 mm et 0,4 mm permet de contrôler davantage une quantité du matériau combustible recouvrant l'âme centrale. Cela contribue à garantir avec certitude et en toute circonstance la qualité « anti-feu » (c'est-à-dire, un classement de réaction au feu A2s1d0 selon la norme européenne EN 13-501-1) pour tout panneau décoratif selon l'invention produit à l'échelle industrielle.

De préférence, l'âme centrale présente en outre une face verso opposée à la face recto. Cette face verso est revêtue d'un deuxième placage de bois distinct du premier placage de bois. L'âme centrale et le deuxième placage de bois sont solidaires l'un avec l'autre.

Ainsi, les deux faces (recto et verso) de l'âme centrale sont recouvertes respectivement par le premier placage de bois et le deuxième placage de bois. Cet agencement permet d'éviter une courbure de l'âme centrale lors de fabrication du panneau décoratif résistant au feu.

De préférence, le deuxième placage de bois présente une troisième épaisseur distincte de la première épaisseur, cette troisième épaisseur étant comprise entre 0,2 mm et 0,6 mm.

La troisième épaisseur sélectivement comprise entre 0,2 mm et 0,6 mm présente un quadruple avantage. D'une part, lorsque le deuxième placage de bois est exposé au feu, elle permet de transmettre quasi instantanément la chaleur issue du feu vers l'âme centrale où cette chaleur se dissipe. Cela contribue à retarder un embrasement du deuxième placage de bois exposé au feu. D'autre part, la troisième épaisseur étant faible, le deuxième placage de bois exposé au feu représente si peu de matériau combustible qu'il n'aliment quasiment pas le feu. Cela contribue à obtenir une réaction du panneau décoratif selon l'invention au feu classée A2 conformément à la norme européenne EN 13-501-1. Le troisième avantage est dû au fait que la troisième épaisseur sélectivement comprise entre 0,2 mm et 0,6 mm rend le panneau décoratif selon l'invention plus léger ce qui facilite son transport et/ou sa mise en place lors des travaux d'aménagement intérieur. Enfin, la troisième épaisseur étant supérieure à 0,2 mm, elle reste suffisamment épaisse pour cacher (c'est-à-dire, rendre invisible de l'extérieur) toute imperfection propre à un état de la surface de la face verso de l'âme centrale.

De préférence, la troisième épaisseur du deuxième placage de bois est égale ou inférieure à 0,4 mm.

La troisième épaisseur sélectivement comprise entre 0,2 mm et 0,4 mm permet de contrôler davantage une quantité du matériau combustible recouvrant l'âme centrale. Cela contribue à garantir avec certitude et en toute circonstance la qualité « anti-feu » (c'est-à-dire, un classement de réaction au feu A2s1d0 selon la norme européenne EN 13-501-1) pour tout panneau décoratif selon l'invention produit à l'échelle industrielle.

De préférence, la troisième épaisseur du deuxième placage de bois est égale à la deuxième épaisseur du premier placage de bois.

Ainsi, le panneau décoratif selon l'invention présente une structure interne symétrique par rapport à l'âme centrale. Grâce à cette structure interne symétrique il est possible d'éviter une courbure de l'âme centrale lors de fabrication et/ou de stockage dudit panneau décoratif.

De préférence, le deuxième placage de bois est identique au premier placage de bois.

Le fait que le deuxième placage de bois est identique au premier placage de bois les rend interchangeables l'un par l'autre. Par exemple, si le premier placage de bois est abimé (par exemple, par des rainures inopinées lors de transport et/ou de livraison), il est possible d'installer le panneau décoratif selon l'invention en orientant le premier placage de bois face au mur (de manière à rendre invisible son état abimé), le deuxième placage de bois non abimé assurant alors un aménagement intérieur attendu.

De préférence, le premier placage de bois comporte une première face extérieure orientée à l'opposé de l'âme centrale. Le deuxième placage de bois comporte une deuxième face extérieure orientée à l'opposé de l'âme centrale. Dans ces conditions, la première face extérieure présente un aspect (tel que, par exemple, couleur et/ou finition) différent par rapport à celui de la deuxième face extérieure.

Cela permet d'élargir des possibilités fonctionnelles offertes par le panneau décoratif selon l'invention et, notamment, d'enrichir un confort visuel produit par ledit panneau décoratif selon l'invention sur un utilisateur, en utilisant, par exemple, alternativement, le premier placage de bois et le deuxième placage de bois, lors de l'aménagement de l'intérieur.

L'âme centrale est constituée d'une plaque pleine fabriquée en plâtre.

Grâce à cet agencement, le panneau décoratif selon l'invention présente non seulement une réaction au feu classée A2 conformément à la norme européenne EN 13-501-1 mais reste suffisamment résistant aux chocs mécaniques ce qui facilite son transport.

De préférence, l'un au moins parmi le premier placage de bois et le deuxième placage de bois est solidarisé avec l'âme centrale au moyen d'une couche d'un mélange collant ignifuge.

Cet agencement permet non seulement de garantir une réaction du panneau décoratif selon l'invention au feu classée A2 conformément à la norme européenne EN 13-501-1 mais aussi renforce des liens solidaires entre l'âme centrale et l'un au moins parmi le premier placage de bois et le deuxième placage de bois ce qui in fine rend le panneau décoratif selon l'invention plus résistant aux chocs mécaniques et facilite ainsi son transport.

De préférence, le mélange collant ignifuge comporte :
- une résine aminoplaste d'urée mélangée avec une mélamine et un formaldéhyde en phase aqueuse,
- un durcisseur, et
- une charge ignifuge à base de phosphore et d'azote.

Ces composants peuvent être aisément mélangés les uns aux autres : la composition ainsi obtenue est adaptée à une production des panneaux décoratifs selon l'invention à l'échelle industrielle.

De préférence, la masse de résine représente de 60% à 70% de la masse totale du mélange collant ignifuge. Dans ces conditions, la masse de durcisseur représente de 5% à 10% de la masse totale du mélange collant ignifuge, et la masse de la charge ignifuge représente de 20% à 30% de la masse totale du mélange collant ignifuge.

Cette formulation avantageuse permet d'obtenir le mélange collant homogène tout en préservant ses qualités ignifuges. Cela contribue à augmenter une qualité des panneaux décoratifs résistants au feu lors de leur production à l'échelle industrielle.

De préférence, le matériau plein incombustible présente une première épaisseur égale ou supérieure à 15 mm.

Grâce à cet agencement, le panneau décoratif selon l'invention présente non seulement une réaction au feu classée A2 conformément à la norme européenne EN 13-501-1 mais reste suffisamment résistant aux chocs mécaniques ce qui facilite son transport. De même, il faut moins de combustible pour transporter ces panneaux décoratifs selon l'invention ce qui contribue au respect de l'environnement. En outre, la première épaisseur du panneau décoratif selon l'invention étant réduite, cela permet de gagner de l'espace lors de tout aménagement intérieur.

Selon un deuxième de ses aspects, l'invention concerne un procédé de fabrication d'un panneau décoratif résistant au feu décrit ci-dessus.

Ce procédé comporte une première étape consistant à étaler une couche d'un mélange collant ignifuge sur une face recto d'une âme centrale, ladite couche étant formée par une quantité du mélange collant ignifuge comprise entre 90 g/m² et 110 g/m².

La quantité du mélange collant ignifuge comprise entre 90 g/m² et 110 g/m² étalée de manière homogène sur la face recto de l'âme centrale contribue à améliorer d'environ 20% une résistance au feu du panneau décoratif selon l'invention.

Ce procédé comporte en outre une deuxième étape consistant à solidariser l'âme centrale et le premier placage de bois l'un avec l'autre par pressage à chaud pendant une durée de pressage comprise entre 60 s et 300 s, sous une température de pressage comprise entre 100°C et 120°C.

Grâce à cette deuxième étape, il est possible de solidifier la couche homogène du mélange collant ignifuge sur la face recto de l'âme centrale de manière à coller fidèlement le premier placage de bois à cette face recto de l'âme centrale. Cela contribue à dissiper davantage de la chaleur vers l'âme centrale lorsque le premier placage de bois est exposé au feu. Par conséquent, un embrasement du premier placage de bois est retardé.

Ce procédé comporte en outre une troisième étape consistant à poncer le premier placage de bois jusqu'à ce qu'il présente une deuxième épaisseur comprise entre 0,2 mm et 0,4 mm.

Cette troisième étape rend la fabrication des panneaux décoratifs selon l'invention à grande échelle plus simple. En effet, pour le premier placage de bois, il devient possible d'utiliser des feuilles de bois présentant la deuxième épaisseur supérieure à 0,6mm : ces feuilles sont moins fragiles et peuvent, de ce fait, être manipulées plus aisément. De plus, elles résistent mieux à des contraintes mécaniques et/ou thermiques lors de la deuxième étape dudit procédé décrite ci-dessus. Après, ces feuilles sont poncées pour optimiser leur deuxième épaisseur de sorte à rendre les panneaux décoratifs selon l'invention plus légers et mieux résistants au feu au sens de la norme européenne EN 13-501-1.

Selon un troisième de ses aspects, l'invention concerne une utilisation du panneau 1 décoratif résistant au feu décrit ci-dessus pour l'un au moins des agencements intérieurs suivants : (a) cloison ; (b) paroi ; (c) porte ; (d) mobilier intérieur ; (e) mur ; (f) plafond.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement - en vue simplifiée de côté en coupe - une variante privilégiée d'un panneau décoratif résistant au feu selon l'invention,
- la figure 2 représente schématiquement un exemple d'une succession des étapes qui correspondent à un mode privilégié d'un procédé de fabrication du panneau décoratif selon l'invention illustré sur la figure 1 et comportant une âme centrale constituée d'une plaque pleine fabriquée en plâtre.

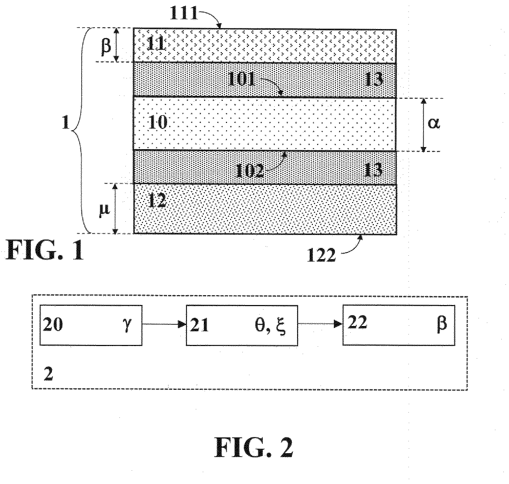

Comme annoncé précédemment et illustré sur la figure 1, l'invention concerne, selon un premier de ses aspects, un panneau 1 décoratif résistant au feu pour un aménagement intérieur. Ce panneau 1 décoratif comporte une âme centrale 10 présentant une face recto 101 revêtue d'un premier placage 11 de bois. L'âme centrale 10 et le premier placage 11 de bois sont solidaires l'un avec l'autre (par exemple, de manière mécanique à l'aide des vis non représentées).

La possibilité de revêtir la face recto 101 de l'âme centrale 10 directement par le premier placage 11 de bois permet de fabriquer lesdits panneaux décoratifs plus rapidement.

En outre, l'âme centrale 10 est constituée d'un matériau plein incombustible.

Selon l'invention, le premier placage 11 de bois présente une deuxième épaisseur β distincte de la première épaisseur α, cette deuxième épaisseur β étant comprise entre 0,2 mm et 0,4 mm : 0,2 mm ≤ β ≤ 0,4 mm.

Comme illustré sur la figure 1, l'âme centrale 10 peut présenter une face verso 102 opposée à la face recto 101. Dans ces conditions, la face verso 102 est revêtue d'un deuxième placage 12 de bois distinct du premier placage 11 de bois. L'âme centrale 10 et le deuxième placage 12 de bois sont solidaires l'un avec l'autre.

De préférence, le deuxième placage 12 de bois présente une troisième épaisseur µ distincte de la première épaisseur α : cf. figure 1. Cette troisième épaisseur µ est comprise entre 0,2 mm et 0,6 mm : 0,2 mm ≤ µ ≤ 0,6 mm.

Dans une variante privilégiée du panneau 1 décoratif selon l'invention, la troisième épaisseur µ du deuxième placage 12 de bois est égale ou inférieure à 0,4 mm : 0,2 mm ≤ µ ≤ 0,4 mm.

De préférence, la troisième épaisseur µ du deuxième placage 12 de bois est égale à la deuxième épaisseur β du premier placage 11 de bois : µ = β (cas non représenté).

Comme illustré sur la figure 1, le premier placage 11 de bois comporte une première face extérieure 111 orientée à l'opposé de l'âme centrale 10. De même, le deuxième placage 12 de bois comporte une deuxième face extérieure 122 orientée à l'opposé de l'âme centrale 10. Dans ces conditions, la première face extérieure 111 présente un aspect (par exemple, sa couleur, sa finition) différent par rapport à celui de la deuxième face extérieure 122.

L'âme centrale 10 est constituée d'une plaque pleine fabriquée en plâtre.

De préférence, l'un au moins parmi le premier placage 11 de bois et le deuxième placage 12 de bois est solidarisé avec l'âme centrale 10 au moyen d'une couche 13 d'un mélange collant ignifuge.

La fixation du premier placage 11 de bois (et du deuxième placage 12 de bois) avec l'âme centrale 10 au moyen du collage permet de dissiper davantage de la chaleur vers l'âme centrale lorsque le premier placage 11 de bois (ou le deuxième placage 12 de bois) est exposé au feu. Cela contribue à obtenir pour le panneau 1 décoratif selon l'invention un classement A2 de réaction au feu selon la norme européenne EN 13-501-1.

De préférence, le mélange collant ignifuge comporte :
- une résine aminoplaste d'urée mélangée avec une mélamine et un formaldéhyde en phase aqueuse,
- un durcisseur, et
- une charge ignifuge à base de phosphore et d'azote.

Avantageusement, la masse de résine peut représenter de 60% à 70% de la masse totale du mélange collant ignifuge. Dans ces conditions, la masse de durcisseur peut représenter de 5% à 10% de la masse totale du mélange collant ignifuge et la masse de la charge ignifuge peut représenter de 20% à 30% de la masse totale du mélange collant ignifuge.

De préférence, le matériau plein incombustible présente une première épaisseur α égale ou supérieure à 15 mm : α ≥ 15 mm.

Selon un deuxième de ses aspects, l'invention concerne un procédé de fabrication 2 du panneau 1 décoratif résistant au feu décrit ci-dessus.

Dans sa variante privilégiée illustrée sur la figure 2, dudit procédé de fabrication 2 vise un panneau 1 décoratif résistant au feu qui comporte une âme centrale constituée d'une plaque pleine fabriquée en plâtre. Ce procédé comporte des étapes suivantes :
- étaler 20 une couche 13 d'un mélange collant ignifuge respectivement sur une face recto 101 (et, de préférence, sur une face verso 102) de l'âme centrale 10, ladite couche 13 étant formée par une quantité γ du mélange collant ignifuge comprise entre 90 g/m² et 110 g/m²,
- solidariser 21 l'âme centrale 10 et le premier placage 11 de bois (et, de préférence, avec le deuxième placage 12 de bois) l'un avec l'autre par pressage à chaud pendant une durée θ de pressage comprise entre 60 s et 300 s, sous une température ξ de pressage comprise entre 100°C et 120°C,
- poncer 22 le premier placage 11 de bois (et, de préférence, le deuxième placage 12 de bois) jusqu'à ce qu'il présente une deuxième épaisseur β comprise entre 0,2 mm et 0,4 mm : 0,2 mm ≤ β ≤ 0,4 mm.

Selon un troisième de ses aspects, l'invention concerne une utilisation du panneau 1 décoratif résistant au feu décrit ci-dessus pour l'un au moins des agencements intérieurs suivants : (a) cloison ; (b) paroi ; (c) porte ; (d) mobilier intérieur ; (e) mur ; (f) plafond.

## Revendications

1. Panneau (1) décoratif résistant au feu pour un aménagement intérieur, ce panneau (1) décoratif comportant une âme centrale (10) présentant une face recto (101) revêtue d'un premier placage (11) de bois, l'âme centrale (10) et le premier placage (11) de bois étant solidaires l'un avec l'autre, l'âme centrale (10) étant constituée d'un matériau plein incombustible présentant une première épaisseur (α), ce matériau plein incombustible étant constituée d'une plaque pleine fabriquée en plâtre, le premier placage (11) de bois présentant une deuxième épaisseur (β) distincte de la première épaisseur (α), **caractérisé en ce que** cette deuxième épaisseur (β) est comprise entre 0,2 mm et 0,4 mm.

2. Panneau (1) décoratif résistant au feu selon la revendication 1, **caractérisé en ce que** l'âme centrale (10) présente en outre une face verso (102) opposée à la face recto (101), la face verso (102) étant revêtue d'un deuxième placage (12) de bois distinct du premier placage (11) de bois, l'âme centrale (10) et le deuxième placage (12) de bois étant solidaires l'un avec l'autre.

3. Panneau (1) décoratif résistant au feu selon la revendication 2, **caractérisé en ce que** le deuxième placage (12) de bois présente une troisième épaisseur (µ) distincte de la première épaisseur (α), cette troisième épaisseur (µ) étant comprise entre 0,2 mm et 0,6 mm.

4. Panneau (1) décoratif résistant au feu selon la revendication 3, **caractérisé en ce que** la troisième épaisseur (µ) du deuxième placage (12) de bois est égale ou inférieure à 0,4 mm.

5. Panneau (1) décoratif résistant au feu selon la revendication 4, **caractérisé en ce que** la troisième épaisseur (µ) du deuxième placage (12) de bois est égale à la deuxième épaisseur (β) du premier placage (11) de bois.

6. Panneau (1) décoratif résistant au feu selon l'une quelconque des revendications 2 à 5, **caractérisé en ce que** le premier placage (11) de bois comporte une première face extérieure (111) orientée à l'opposé de l'âme centrale (10), **en ce que** le deuxième placage (12) de bois comporte une deuxième face extérieure (122) orientée à l'opposé de l'âme centrale (10), et **en ce que** la première face extérieure (111) présente un aspect différent par rapport à celui de la deuxième face extérieure (122).

7. Panneau (1) décoratif résistant au feu selon l'une quelconque des revendications 2 à 6, **caractérisé en ce que** l'un au moins parmi le premier placage (11) de bois et le deuxième placage (12) de bois est solidarisé avec l'âme centrale (10) au moyen d'une couche (13) d'un mélange collant ignifuge.

8. Panneau (1) décoratif résistant au feu selon la revendication 7, **caractérisé en ce que** le mélange collant ignifuge comporte :
• une résine aminoplaste d'urée mélangée avec une mélamine et un formaldéhyde en phase aqueuse,
• un durcisseur, et
• une charge ignifuge à base de phosphore et d'azote.

9. Panneau (1) décoratif résistant au feu selon la revendication 8, **caractérisé en ce que** la masse de résine représente de 60% à 70% de la masse totale du mélange collant ignifuge,
**en ce que** la masse de durcisseur représente de 5% à 10% de la masse totale du mélange collant ignifuge, et
**en ce que** la masse de la charge ignifuge représente de 20% à 30% de la masse totale du mélange collant ignifuge.

10. Panneau (1) décoratif résistant au feu selon l'une quelconque des revendications 1 à 9, **caractérisé en ce que** la première épaisseur (α) du matériau plein incombustible est égale ou supérieure à 15 mm.

11. Procédé de fabrication (2) d'un panneau (1) décoratif résistant au feu selon l'une quelconque des revendications 1 à 10, **caractérisé en ce que** ledit procédé de fabrication (2) comporte trois étapes suivantes successives l'une à l'autre :
• d'abord, une première étape consistant à étaler (20) une couche (13) d'un mélange collant ignifuge sur une face recto (101) d'une âme centrale (10), ladite couche (13) étant formée par une quantité (γ) du mélange collant ignifuge comprise entre 90 g/m² et 110 g/m²,
• après la première étape, une deuxième étape consistant à solidariser (21) l'âme centrale (10) et le premier placage (11) de bois l'un avec l'autre par pressage à chaud pendant une durée (θ) de pressage comprise entre 60 s et 300 s, sous une température (ξ) de pressage comprise entre 100°C et 120°C,
• après la deuxième étape, une troisième étape consistant à poncer (22) le premier placage (11) de bois jusqu'à ce qu'il présente une deuxième épaisseur (β) comprise entre 0,2 mm et 0,4 mm.

12. Utilisation du panneau (1) décoratif résistant au feu selon l'une quelconque des revendications 1 à 10 pour l'un au moins des agencements intérieurs suivants : (a) cloison ; (b) paroi ; (c) porte ; (d) mobilier intérieur ; (e) mur ; (f) plafond.

## Patentansprüche

1. Feuerbeständiges dekoratives Paneel (1) für eine Inneneinrichtung, wobei dieses dekorative Paneel (1) einen zentralen Kern (10) mit einer Vorderseite (101) aufweist, die mit einem ersten Holzfurnier (11) beschichtet ist, wobei der zentrale Kern (10) und das erste Holzfurnier (11) einstückig miteinander ausgebildet sind, wobei der zentrale Kern (10) aus einem massiven, nicht brennbaren Material einer ersten Dicke (α) besteht, wobei dieses massive, nicht brennbare Material aus einer massiven Platte aus Gips besteht, wobei das erste Holzfurnier (11) eine zweite Dicke (β) aufweist, die sich von der ersten Dicke (α) unterscheidet, **dadurch gekennzeichnet, dass** diese zweite Dicke (β) zwischen 0,2 mm und 0,4 mm liegt.

2. Feuerbeständiges dekoratives Paneel (1) nach Anspruch 1, **dadurch gekennzeichnet, dass** der zentrale Kern (10) außerdem eine der Vorderseite (101) gegenüberliegende Rückseite (102) aufweist, wobei die Rückseite (102) mit einem zweiten Holzfurnier (12) beschichtet ist, das sich von dem ersten Holzfurnier (11) unterscheidet, wobei der zentrale Kern (10) und das zweite Holzfurnier (12) fest miteinander verbunden sind.

3. Feuerbeständiges dekoratives Paneel (1) nach Anspruch 2, **dadurch gekennzeichnet, dass** das zweite Holzfurnier (12) eine dritte Dicke (µ) aufweist, die sich von der ersten Dicke (α) unterscheidet, wobei diese dritte Dicke (µ) zwischen 0,2 mm und 0,6 mm liegt.

4. Feuerbeständiges dekoratives Paneel (1) nach Anspruch 3, **dadurch gekennzeichnet, dass** die dritte Dicke (µ) des zweiten Holzfurniers (12) gleich oder kleiner als 0,4 mm ist.

5. Feuerbeständiges dekoratives Paneel (1) nach Anspruch 4, **dadurch gekennzeichnet, dass** die dritte Dicke (µ) des zweiten Holzfurniers (12) gleich der zweiten Dicke (β) des ersten Holzfurniers (11) ist.

6. Feuerbeständiges dekoratives Paneel (1) nach einem der Ansprüche 2 bis 5, **dadurch gekennzeichnet, dass** das erste Holzfurnier (11) eine erste Außenfläche (111) aufweist, die vom zentralen Kern (10) abgewandt ist, dass das zweite Holzfurnier (12) eine zweite Außenfläche (122) aufweist, die vom zentralen Kern (10) abgewandt ist, und dass die erste Außenfläche (111) ein anderes Aussehen hat als die zweite Außenfläche (122).

7. Feuerbeständiges dekoratives Paneel (1) nach einem der Ansprüche 2 bis 6, **dadurch gekennzeichnet, dass** mindestens eines von dem ersten Holzfurnier (11) und dem zweiten Holzfurnier (12) mit dem zentralen Kern (10) mittels einer Schicht (13) aus einem feuerfesten Klebstoffgemischverbunden ist.

8. Feuerbeständiges dekoratives Paneel (1) nach Anspruch 7, **dadurch gekennzeichnet, dass** das feuerfeste Klebstoffgemisch umfasst:
• ein Aminoplast-Harnstoffharz, gemischt mit Melamin und Formaldehyd in der wässrigen Phase,
• einen Härter, und
• einen feuerfesten Füllstoff auf Phosphor- und Stickstoffbasis.

9. Feuerbeständiges dekoratives Paneel (1) nach Anspruch 8, **dadurch gekennzeichnet, dass** die Masse des Harzes 60 % bis 70 % der Gesamtmasse der feuerfesten Klebstoffmischung ausmacht, dass die Masse des Härters 5 % bis 10 % der Gesamtmasse der feuerfesten Klebstoffmischung ausmacht, und dass die Masse des feuerfesten Füllstoffs 20 % bis 30 % der Gesamtmasse des feuerfesten Klebstoffgemischs ausmacht.

10. Feuerbeständiges dekoratives Paneel (1) nach einem der Ansprüche 1 bis 9, **dadurch gekennzeichnet, dass** die erste Dicke (α) des massiven, nicht brennbaren Materials gleich oder größer als 15 mm ist.

11. Verfahren zur Herstellung (2) einer feuerbeständigen dekorativen Paneels (1) nach einem der Ansprüche 1 bis 10, **dadurch gekennzeichnet, dass** das Herstellungsverfahren (2) drei aufeinanderfolgende Schritte umfasst:
• zunächst einen Schritt der darin besteht, eineSchicht (13) eines feuerfesten Klebstoffgemischs auf einer Vorderseite (101) eines zentralen Kerns (10) zu verteilen (20), wobei die Schicht (13) durch eine Menge (γ) des feuerfesten Klebstoffgemischs zwischen 90 g/m² und 110 g/m² gebildet wird,
• nach dem ersten Schritt einen zweiten Schritt, der darin besteht, den zentralen Kern (10) und das erste Holzfurnier (11) durch Heißpressen für eine Pressdauer (θ) zwischen 60 s und 300 s bei einer Presstemperatur (ξ) zwischen 100 °C und 120 °C zu verbinden (21),
• nach dem zweiten Schritt einen dritten Schritt, der darin besteht, das erste Holzfurnier (11) zu schleifen (22), bis es eine zweite Dicke (β) zwischen 0,2 mm und 0,4 mm aufweist.

12. Verwendung des feuerbeständigen dekorativen Paneels (1) nach einem der Ansprüche 1 bis 10 für mindestens eine der folgenden Inneneinrichtungen:
(a) Trennwand;
(b) Wand;
(c) Tür;
(d) Innenmöbel;
(e) Mauer;
(f) Decke.

## Claims

1. A fire resistant, decorative panel (1) for interior fitting, this decorative panel (1) comprising a central core (10) having a front face (101) covered with a first veneer (11) of wood, the central core (10) and the first veneer (11) of wood being integral with each other, the central core (10) consisting of a non-combustible solid material having a first thickness (α), this non-combustible solid material consisting of a solid plate made of plaster, the first veneer (11) of wood having a second thickness (β) distinct from the first thickness (α), **characterized in that** this second thickness (β) is between 0,2 mm and 0,4 mm.

2. The fire resistant, decorative panel (1) according to claim 1, **characterized in that** the central core (10) also has a back face (102) opposite the front face (101), the back face (102) being covered with a second veneer (12) of wood, distinct from the first veneer (11) of wood, the central core (10) and the second veneer (12) of wood being integral with one another.

3. The fire resistant, decorative panel (1) according to claim 2, **characterized in that** the second veneer (12) of wood has a third thickness (µ), distinct from the first thickness (α), this third thickness (µ) being between 0,2 mm and 0,6 mm.

4. The fire resistant, decorative panel (1) according to claim 3, **characterized in that** the third thickness (µ) of the second veneer (12) of wood is equal to or less than 0,4 mm.

5. The fire resistant, decorative panel (1) according to claim 4, **characterized in that** the third thickness (µ) of the second veneer (12) of wood is equal to the second thickness (β) of the first veneer (11) of wood.

6. The fire resistant, decorative panel (1) according to any one of claims 2 to 5, **characterized in that** the first veneer (11) of wood comprises a first outer face (111) oriented opposite the central core (10), **in that** the second veneer (12) of wood comprises a second outer face (122) oriented opposite the central core (10), and **in that** the first outer face (111) has a different appearance compared to that of the second outer face (122).

7. The fire resistant, decorative panel (1) according to any one of claims 2 to 6, **characterized in that** at least one of the first veneer (11) of wood and the second veneer (12) of wood is secured to the central core (10) by means of a layer (13) of a flame retardant adhesive mixture.

8. The fire resistant, decorative panel (1) according to claim 7, **characterized in that** the flame retardant adhesive mixture comprises:
• an aminoplast resin of urea mixed with a melamine and a formaldehyde in the aqueous phase,
• a hardener, and
• a flame retardant filler based on phosphorus and nitrogen.

9. The fire resistant, decorative panel (1) according to claim 8, **characterized in that** the mass of resin represents from 60% to 70% of the total mass of the flame retardant adhesive mixture, **in that** the mass of hardener represents from 5% to 10% of the total mass of the flame retardant adhesive mixture, and **in that** the mass of the flame retardant filler represents from 20% to 30% of the total mass of the flame retardant adhesive mixture.

10. The fire resistant, decorative panel (1) according to any one of claims 1 to 9, **characterized in that** the first thickness (α) of the non-combustible solid material is equal to or greater than 15 mm.

11. A method for manufacturing (2) a fire resistant, decorative panel (1) according to any one of claims 1 to 10, **characterized in that** said manufacturing method (2) comprises three successive following steps, one after the other:
• firstly, a first step consisting in spreading (20) a layer (13) of a flame retardant adhesive mixture on a front face (101) of a central core (10), said layer (13) being formed by a quantity (γ) of the flame retardant adhesive mixture between 90 g/m² and 110 g/m²,
• after the first step, a second step consisting in securing (21) the central core (10) and the first veneer (11) of wood to each other by hot pressing for a pressing duration (θ) of between 60 s and 300 s, under a pressing temperature (ξ) of between 100°C and 120°C,
• after the second step, a third step consisting in abrading (22) the first veneer (11) of wood until it has a second thickness (β) of between 0,2 mm and 0,4 mm.

12. Use of a fire resistant, decorative panel (1) according to any one of claims 1 to 10 for at least one of the following interior fittings:
(a) divider;
(b) partition wall;
(c) door;
(d) interior furniture;
(e) wall;
(f) ceiling.
